# EUROPÄISCHE PATENTSCHRIFT

(11) **EP 3 313 712 B1**
(45) Veröffentlichungstag und Bekanntmachung des Hinweises auf die Patenterteilung: **25.03.2020**
(21) Anmeldenummer: 16724411.0
(22) Anmeldetag: 23.05.2016
(51) Int. Cl.: B62D 7/12, B62D 7/16, F16C 11/06

(54) **AXIALKUGELGELENK**
AXIAL BALL JOINT ARTICULATION
ARTICULATION SPHÉRIQUE AXIALE

(30) Priorität: 25.06.2015 DE 102015211765
(43) Veröffentlichungstag der Anmeldung: 02.05.2018
(73) Patentinhaber: ZF Friedrichshafen AG, 88046 Friedrichshafen (DE)
(72) Erfinder: LAHRMANN, Tobias, 49086 Osnabrück (DE); BLANKE, Arnold, 49401 Damme (DE); HERRMANN, Thomas, 49191 Belm (DE); ROSSOL, Michael, 32351 Stemwede - Dielingen (DE)
(86) Internationale Anmeldenummer: PCT/EP2016/061520
(87) Internationale Veröffentlichungsnummer: WO 2016/206879

(56) Entgegenhaltungen:
- EP-A1- 1 500 573
- EP-A1- 1 777 138
- WO-A1-2009/094972

## Beschreibung

Die Erfindung betrifft ein Axialkugelgelenk, insbesondere zur Verwendung an einem Lenkgetriebe, gemäß dem Oberbegriff des Patentanspruchs 1.

Derartige Axialkugelgelenke sind aus dem Stand der Technik allgemein bekannt und werden insbesondere an Fahrzeuglenkungen eingesetzt. Zweckmäßigerweise weisen Fahrzeuglenkungen eine Endbegrenzung auf, um deren maximale Auslenkung festzulegen. Wird die Lenkung in den Bereich der Endbegrenzung gebracht, so führt die mechanische Begrenzung des Lenkungsausschlages zu einem harten Anschlagen der Lenkung im Endbereich. Zum Schutz des Lenkgetriebes vor mechanischer Beschädigung ist es aus dem Stand der Technik bekannt, das der Spurstange zugeordnete Axialkugelgelenk mit einem Anschlagsdämpfer zu versehen.

Verwiesen sei in diesem Zusammenhang auf die DE 10 2008 007 107 A1, welche ein Axialkugelgelenk für ein Lenkgetriebe offenbart, umfassend ein einseitig offenes Gelenkgehäuse zur Aufnahme einer einem Gelenkzapfen zugeordneten Gelenkkugel, wobei an dem Gelenkgehäuse ein Gehäusezapfen angeordnet ist und wobei auf der mit dem Gehäusezapfen versehenen Seite des Gelenkgehäuses eine Dämpfungseinrichtung vorgesehen ist. Die Dämpfungseinrichtung wirkt dabei im Sinne eines Anschlagdämpfers, der auf dem Axialtopf des Axialkugelgelenks montiert ist, wobei sich dieser an der Schnittstelle zum Lenkgetriebe, zwischen Axialkugelgelenk und Zahnstange befindet.

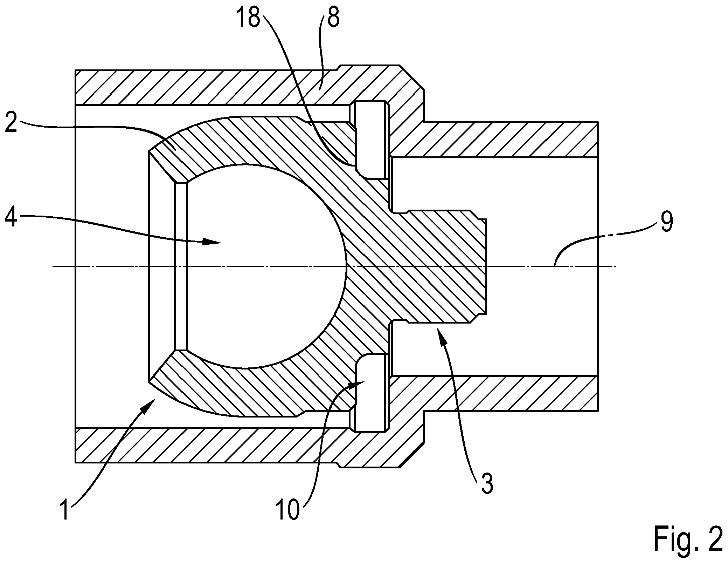

Bei dem aus DE 10 2008 007 107 A1 bekannten Axialkugelgelenk ist die zum Einsatz kommende Dämpfungseinrichtung als ringförmiger Wulst ausgebildet, wobei gemäß einer in der dortigen Figur 2 dargestellten Ausführungsform auf einen Absatz des Gelenkgehäuses eine der Dämpfungseinrichtung Stabilität verleihende Metalleinlage aufgepresst ist.

Aus der EP 1 777 138 A1 ist eine gattungsgemäße Lenkeinrichtung für ein Kraftfahrzeug bekannt, wobei ein Anschlagelement aus einem elastischen Material und einem Stabilisierungselement in der Gestalt eines Stahlringes oder einer Stahlscheibe in zwei Dämpfungsbereiche unterteilt ist. Zusätzlich sind an zwei axialen Enden des Anschlagelementes weitere Stahlscheiben oder Stahlringe angeordnet.

Es ist eine Aufgabe der vorliegenden Erfindung, ein Axialkugelgelenk gemäß der eingangs beschriebenen Art anzugeben, welches im Hinblick auf die bestimmungsgemäße Verwendung am Lenkgetriebe dahingehend verbessert ist, dass neben einem Schutz vor mechanischer Beschädigung des Lenkgetriebes und einer möglichst exakten Begrenzung des Lenkausschlags eine hohe Haltbarkeit der Dämpfungseinrichtung erreicht wird. Das Axialkugelgelenk soll zudem wirtschaftlich herstellbar und für verschiedene Fahrzeugtypen einsetzbar sein.

Die genannte Aufgabe wird gelöst durch ein Axialkugelgelenk gemäß den Merkmalen des Patentanspruchs 1. Dieses zeichnet sich dadurch aus, dass die Dämpfungseinrichtung ein elastisches Dämpfungselement aus Kunststoff mit einem metallischen Einsatz aufweist, wobei der metallische Einsatz vom Material des elastischen Dämpfungselements umspritzt ist.

Dabei wurde zunächst erkannt, dass eine wesentliche Funktion eines an einem Lenkgetriebe zum Einsatz kommenden Axialkugelgelenks darin besteht, das Lenkgetriebe vor mechanischer Beschädigung zu schützen. Mechanische Beschädigungen können insbesondere dadurch verursacht werden, dass im Werkstattfall die Lenkung des aufgebockten Fahrzeugs über die Räder gegen den Lenkanschlag gestoßen wird. Es wurde erkannt, dass sich die dabei auftretenden Kräfte auf das Gehäuse des Lenkgetriebes vorteilhaft durch eine Dämpfungseinrichtung auf ein unschädliches Maß reduzieren lassen, die auf der mit dem Gehäusezapfen versehenen Seite des Gelenkgehäuses angeordnet ist. Durch die damit verwirklichte Zuordnung und Integration der Dämpfungseinrichtung in die Baugruppe des Axialkugelgelenkes werden Beschädigungen auf konstruktiv einfache Weise vermieden. Zugleich wird die Dämpfungseinrichtung dazu genutzt, den Lenkausschlag zu begrenzen und den maximalen Zahnstangenhub zu definieren.

Darüber hinaus wurde erfindungsgemäß erkannt, dass die am Axialkugelgelenk zum Einsatz kommende Dämpfungseinrichtung in bestimmten Situationen hohen Belastungen standhalten muss. Zur Erreichung einer hohen Belastbarkeit ist die Dämpfungseinrichtung erfindungsgemäß auf besondere Weise gestaltet, indem diese ein elastisches Dämpfungselement aus Kunststoff mit einem metallischen Einsatz aufweist, wobei der metallische Einsatz vom Material des elastischen Dämpfungselements umspritzt ist. Der metallische Einsatz ist somit vom Material des elastischen Dämpfungselements eingebettet und somit weitestgehend geschützt vor äußeren Einflüssen wie beispielsweise Korrosion. Eine Umspritzung kann in diesem Zusammenhang als vollständige Umspritzung verstanden werden, wonach der metallische Einsatz vollständig vom Material des elastischen Dämpfungselements umgeben ist. Im Zusammenhang dieser Erfindung sei unter einer Umspritzung aber insbesondere auch eine teilweise Umspritzung zu verstehen, wonach der metallische Einsatz vom Material des elastischen Dämpfungselements zwar weitestgehend, jedoch nicht in sämtlichen Bereichen umgeben ist. Dabei sind verschiedene Gestaltungen denkbar.

Gemäß einer vorteilhaften Weiterbildung des Axialkugelgelenks sind das Dämpfungselement und der metallische Einsatz ringförmig ausgebildet und koaxial zueinander angeordnet. Eine solche Ausführung und Anordnung von Dämpfungselement und metallischem Einsatz weist den Vorteil auf, dass sich die Dämpfungseinrichtung mit verhältnismäßig geringem Aufwand am Gehäusezapfen des Gelenkgehäuses montieren lässt, da es sich um ein im Wesentlichen rotationssymmetrisches Bauteil handelt, das nicht ausgerichtet zu werden braucht.

Das elastische Dämpfungselement ist grundsätzlich aus einem für den genannten Einsatzzweck geeigneten Kunststoff hergestellt, vorteilhaft ist dieses aus thermoplastischem Polyurethan gefertigt.

Durch die erfindungsgemäß beanspruchte Art der Fertigung der Dämpfungseinrichtung, wonach der metallische Einsatz vom Material des elastischen Dämpfungselements umspritzt ist, lässt sich auf einfache Weise erreichen, dass die Dämpfungseinrichtung und der metallische Einsatz durch Formschluss miteinander verbunden sind. Diese Art der Verbindung zwischen elastischem Dämpfungselement und metallischem Einsatz sorgt bei relativ geringem Fertigungsaufwand für eine hohe Verbindungsfestigkeit zwischen metallischem Einsatz und elastischem Dämpfungselement sowie für eine geringe Anfälligkeit gegenüber mechanischer Beanspruchung.

Gemäß einer vorteilhaften Weiterbildung des Axialkugelgelenks ist die Dämpfungseinrichtung bezogen auf eine Radialebene im Wesentlichen symmetrisch gestaltet. Durch eine symmetrische Anordnung bezogen auf die Radialebene lässt sich mit der Dämpfungseinrichtung verhältnismäßig viel der Anschlagsenergie absorbieren, da jeweils zu beiden Seiten der radial verlaufenden Symmetrieebene eine gleiche Menge an dämpfendem Material vorhanden ist.

Zur Erfüllung der Grundfunktion der Dämpfungseinrichtung, nämlich dem Schutz vor mechanischer Beschädigung, weist vorteilhaft das Dämpfungselement an axial entgegengesetzten Seiten jeweils eine axiale Anlagefläche auf. Im unverformten Zustand gerät bei Erreichen des Lenkanschlags einerseits das Gelenkgehäuse, andererseits das Gehäuse des Lenkgetriebes mit diesen axialen Anlageflächen des Dämpfungselements zur Anlage. Sobald beide axialen Anlageflächen am Gelenkgehäuse bzw. am Lenkgetriebe anliegen, kann - bei weiterer Krafteinwirkung - eine Verformung des Dämpfungselements einsetzen, wodurch die Anschlagsenergie absorbiert wird.

Gemäß einer vorteilhaften Weiterbildung des Axialkugelgelenks ist im Dämpfungselement wenigstens eine Aussparung vorgesehen, um ein Funktionselement des metallischen Einsatzes freizugeben. Der metallische Einsatz ist in diesem Fall nur teilweise vom Material des elastischen Dämpfungselements umspritzt, nämlich in sämtlichen Bereichen, an denen keine Aussparung vorgesehen ist. Bei dem Funktionselement des metallischen Einsatzes kann es sich um grundsätzlich jede funktionale Einheit handeln, wobei die wenigstens eine Aussparung dazu dient, dass dieses Funktionselement nicht vom Material des Dämpfungselements überdeckt ist. Verschiedene solcher Funktionselemente sind denkbar.

Vorteilhaft gibt die wenigstens eine Aussparung einen axialen Anschlag des metallischen Einsatzes frei, welcher die axiale Verformung der Dämpfungseinrichtung begrenzt. Demnach ist an dem metallischen Einsatz zumindest ein axialer Anschlag ausgebildet, der durch die Aussparung freigegeben wird. Der axiale Anschlag ist somit nicht vom Material des Dämpfungselements verdeckt, so dass dieser - im verformten Zustand des elastischen Dämpfungselements - unmittelbar am Gelenkgehäuse bzw. am Lenkgetriebegehäuse anliegen kann und auf diese Weise den Endanschlag des Lenkausschlags exakt definiert. Da der Endanschlag somit ohne Zwischenschaltung von Kunststoff erreicht wird, lässt sich eine besonders exakte Vorgabe der Endposition erzielen.

Bevorzugt sind an dem metallischen Einsatz mehrere, vorzugsweise sechs axiale Anschläge ausgebildet, die über den Umfang gleich voneinander beabstandet sind. Durch die Ausbildung mehrerer axialer Anschläge verteilen sich die Anschlagskräfte auf mehrere Bereiche, an denen folglich jeweils geringere und zueinander gleichmäßige Kräfte wirken. Besonders vorteilhaft sind die axialen Anschläge dabei an axial entgegengesetzten Seiten, insbesondere an einer dem Gelenkgehäuse zugewandten Seite und an einer dem Lenkgetriebe zugewandten Seite des metallischen Einsatzes ausgebildet. Eine derartige Gestaltung entspricht der wie zuvor bereits beschriebenen Symmetrie, bezogen auf die Radialebene der Dämpfungseinrichtung.

Zweckmäßigerweise sind die axialen Anschläge, die am metallischen Einsatz ausgebildet sind, gegenüber der axialen Anlagefläche des Dämpfungselements, in dessen unverformtem Zustand zurückversetzt. Hierdurch wird bewirkt, dass bei Erreichen des Lenkanschlags zunächst gezielt eine Verformung des elastischen Dämpfungselements stattfindet, wodurch sich die Bewegungsenergie zumeist vollständig absorbieren lässt. Überschreitet diese Energie jedoch die vom Dämpfungselement absorbierbare Energie, so sorgen die axialen Anschläge des metallischen Einsatzes für eine exakte Endbegrenzung des Lenkungshubs.

Eine vorteilhafte Weiterbildung sieht vor, dass die vorgesehenen Aussparungen eine Aufweitung aufweisen, um zu gewährleisten, dass die axialen Anschläge auch bei einer Materialverschiebung im komprimierten Zustand der Dämpfungseinrichtung in unmittelbaren Kontakt mit Anschlagsflächen an Gelenkgehäuse bzw. Lenkgetriebe gelangen.

Wie bereits zuvor erwähnt, ist im Dämpfungselement vorteilhaft wenigstens eine Aussparung vorgesehen, um ein Funktionselement des metallischen Einsatzes freizugeben. In vorteilhafter Weiterbildung der Erfindung kann eine solche Aussparung auch dazu dienen, eine radial nach innen weisende, am metallischen Einsatz ausgebildete Lasche freizugeben. Eine solche Lasche kann insbesondere dazu dienen, die Dämpfungseinrichtung im Sinne einer Verliersicherung gegenüber der Zahnstange zu sichern.

Vorteilhaft sind demnach am metallischen Einsatz mehrere, vorzugsweise drei radial nach innen weisende Laschen ausgebildet, die von der Mittelachse des Axialkugelgelenks jeweils weiter beabstandet sind als ein am Gelenkgehäuse ausgebildeter Absatz, jedoch weniger weit beabstandet sind als ein Außenumfang der Zahnstange. Durch diese Abmessungen ist zunächst gewährleistet, dass zwischen metallischem Einsatz und dem Absatz des Gelenkgehäuses ein Freiraum besteht, so dass zwischen diesen ein axiales Spiel möglich ist. Weiterhin wird damit im Sinne einer Verliersicherung wirksam verhindert, dass die Dämpfungseinrichtung in axialer Richtung über eine am Gelenkgehäuse zu befestigende Zahnstange des Lenkgetriebes rutschen kann. Vorteilhaft sind die Laschen über den Umfang gleich voneinander beabstandet.

Die Erfindung wird nachfolgend anhand einer Zeichnung näher erläutert. Daraus ergeben sich auch weitere vorteilhafte Ausgestaltungen und Wirkungen der Erfindung.

In der Zeichnung zeigt:
- Fig. 1: eine Anordnung von Spurstange und Lenkgetriebe in Seitenansicht,
- Fig. 2: ein Axialkugelgelenk im Anschlagszustand am Gehäuse des Lenkgetriebes,
- Fig. 3: eine Dämpfungseinrichtung eines erfindungsgemäßen Axialkugelgelenks in perspektivischer teilweise geschnittener Ansicht.

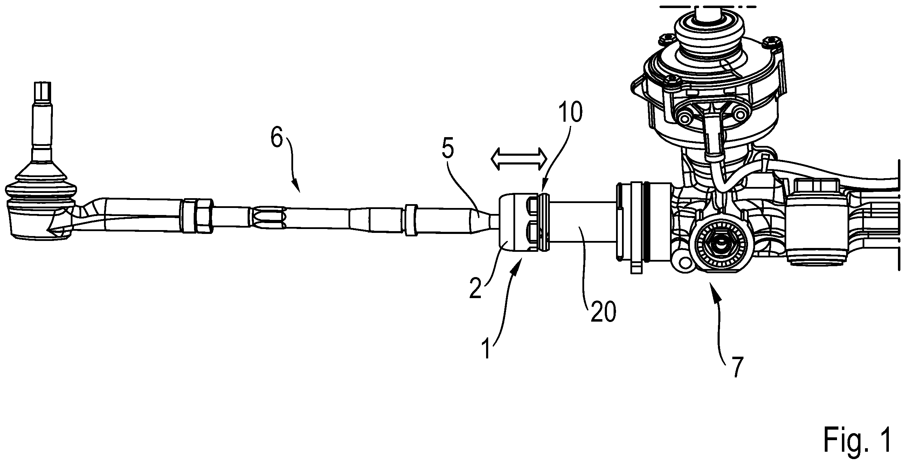

Figur 1 zeigt in Seitenansicht eine Spurstange 6, die ein Axialkugelgelenk 1 aufweist und über dieses mit einem Lenkgetriebe 7 mechanisch verbunden ist. Durch das Lenkgetriebe 7 verursachte Stellbewegungen bewirken eine Verschiebung des Axialkugelgelenks 1, in der durch den Doppelpfeil angedeuteten Richtung. Das Axialkugelgelenk 1 umfasst ein einseitig offenes Gelenkgehäuse 2, das eine (nicht dargestellte) Gelenkkugel aufnimmt. Die Gelenkkugel ist an einem Gelenkzapfen 5 befestigt, der somit kugelschwenkbeweglich gegenüber dem Gelenkgehäuse 2 gelagert ist. Auf der dem Lenkgetriebe 7 zugewandten Seite des Gelenkgehäuses 2 ist eine Dämpfungseinrichtung 10 angeordnet. Die Dämpfungseinrichtung 10, auch als Anschlagdämpfer bezeichnet, ist auf den Axialtopf des Axialkugelgelenks 1 montiert. Im dargestellten montierten Zustand befindet sich die Dämpfungseinrichtung 10 an einer Schnittstelle zum Lenkgetriebe 7, zwischen Gelenkgehäuse 2 und Zahnstange 20.

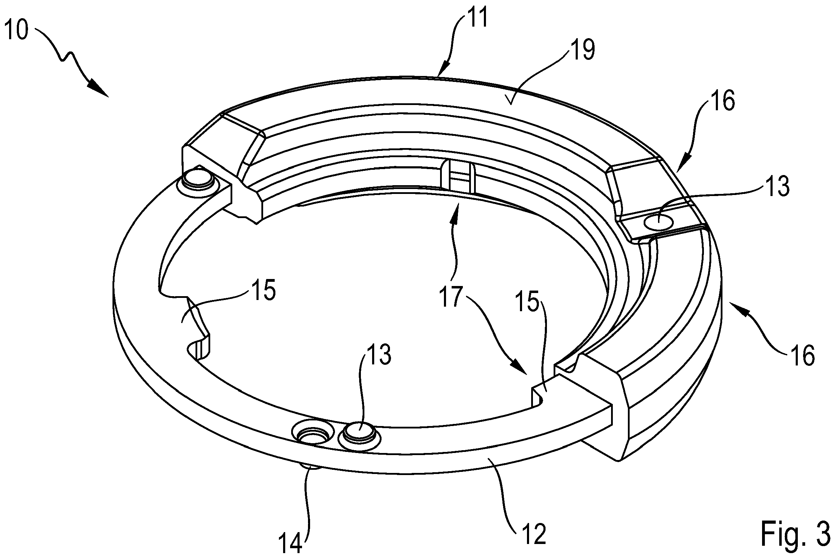

Abhängig vom jeweiligen Lenkungseinschlag (links und rechts) bewegt sich die Zahnstange 20 einschließlich des damit verbundenen Axialkugelgelenks 1 in Richtung des Doppelpfeils hin und her. Eine wesentliche Funktion der Dämpfungseinrichtung 10 besteht darin, das Lenkgetriebe 7 vor mechanischer Beschädigung zu schützen, die dadurch entstehen kann, dass bei aufgebocktem Fahrzeug die Räder gegen den Lenkanschlag gestoßen werden. Die dabei auftretenden Kräfte, welche auf das Gehäuse 8 des Lenkgetriebes 7 wirken, werden durch die Dämpfungseinrichtung 10 auf ein unschädliches Niveau reduziert. Der Aufbau und die Anordnung der Dämpfungseinrichtung 10 am Axialkugelgelenk 1 sei dazu nachfolgend anhand der Figuren 2 und 3 näher erläutert.

Figur 2 zeigt einen Schnitt durch das Gelenkgehäuse 2 des bereits in Figur 1 gezeigten Axialkugelgelenks 1, wobei aus Darstellungsgründen der Gelenkzapfen 5 nicht gezeigt ist, dafür ist die Position einer dem Gelenkzapfen 5 zugeordneten Gelenkkugel 4 angedeutet. Bei dem Gelenkgehäuse 2 handelt es sich um ein einseitig offenes Bauteil, das sich zur Aufnahme der dem Gelenkzapfen zugeordneten Gelenkkugel 4 eignet. Auf einer der Gehäuseöffnung abgewandten Seite des Gelenkgehäuses 2 ist ein Gehäusezapfen 3 angeordnet, der in Richtung einer Mittelachse 9 des Axialkugelgelenks 1 vom Gelenkgehäuse 2 abragt.

Das Gelenkgehäuse 2 weist auf der dem Gehäusezapfen 3 zugewandten Seite einen Absatz 18 auf. Eine nachfolgend noch näher zu erläuternde Dämpfungseinrichtung 10 ist in diesen Absatz 18 eingesetzt. Die Dämpfungseinrichtung 10 ist dabei durch einen Presssitz auf dem Absatz 18 des Gelenkgehäuses 2 fixiert. Der Presssitz wird erzeugt durch eine Pressung zwischen dem Material eines Kunststoffrings 11 und dem Außenumfang des Absatzes 18.

Gemäß dem in Figur 2 dargestellten Zustand befindet sich das Gelenkgehäuse 2 in einer Anschlagsposition gegenüber dem Gehäuse 8 des Lenkgetriebes 7. D. h., bezogen auf die Darstellung gemäß Figur 1, dass das Gelenkgehäuse 2 so weit nach rechts verfahren wurde, dass die am Gelenkgehäuse 2 angeordnete Dämpfungseinrichtung 10 in Kontakt mit dem Gehäuse 8 des Lenkgetriebes 7 gerät. Aufgrund einer Krafteinwirkung entlang der Mittelachse 9 in Richtung des Lenkgetriebes 7 übt das Gelenkgehäuse 2 eine Kraft auf die Dämpfungseinrichtung 10 aus, die zu einer Verformung der Dämpfungseinrichtung 10 zwischen Gelenkgehäuse 2 und Gehäuse 8 des Lenkgetriebes 7 führt. Der Aufbau und die Funktionsweise der Dämpfungseinrichtung 10 seien nachfolgend anhand der Figur 3 näher erläutert.

Figur 3 zeigt in einer perspektivischen, teilweise geschnittenen Darstellung, eine Dämpfungseinrichtung 10, die an einem erfindungsgemäßen Axialkugelgelenk 1, wie anhand der Figuren 1 und 2 bereits erläutert, zum Einsatz kommt. Es handelt sich bei der Dämpfungseinrichtung 10 um ein ringförmiges Bauteil, das aus einem elastischen Dämpfungselement 11 aus Polyurethan sowie einem metallischen Einsatz 12 besteht, wobei der metallische Einsatz 12 vom Material des elastischen Dämpfungselements 11 umspritzt ist. Im gezeigten Ausführungsbeispiel handelt es sich um eine teilweise Umspritzung, wobei der metallische Einsatz 12 weitestgehend vom Material des elastischen Dämpfungselements 11 umgeben ist.

Aufgrund der gezeigten Umspritzung sind das elastische Dämpfungselement 11 und der metallische Einsatz 12 formschlüssig miteinander verbunden. Die Dämpfungseinrichtung 10 ist bezogen auf eine Radialebene im Wesentlichen symmetrisch gestaltet. Bezogen auf eine mittige Radialebene der Dämpfungseinrichtung 10 erstreckt sich das Material des Dämpfungselements 11 und des metallischen Einsatzes 12 gleichmäßig in beide axiale Richtungen.

Der metallische Einsatz 12 ist vom Material des elastischen Dämpfungselements 11 fast vollständig umschlossen. Die Umspritzung ist lediglich unterbrochen durch Aussparungen 16, 17, die dazu vorgesehen sind, Funktionselemente 13, 14, 15 des metallischen Einsatzes 12 freizugeben.

An dem metallischen Einsatz 12 sind an der bezogen auf die Darstellung gemäß Figur 3 nach oben gerichteten Seite drei axiale Anschläge 13 ausgebildet, die zueinander um 120 Grad über den Umfang versetzt sind. Es handelt sich bei den axialen Anschlägen 13 um Vorsprünge, die durch das Material des metallischen Einsatzes 12 geprägt sind. In entgegengesetzter Richtung, d. h. zur in der Zeichnung nach unten weisenden Seite sind ebenfalls drei über den Umfang gleich voneinander beabstandete axiale Anschläge 14 ausgebildet, die zueinander um 120 Grad über den Umfang versetzt sind. Entsprechend sind auf jeder Seite des Dämpfungselements 11 drei, insgesamt also sechs Aussparungen 16 ausgebildet, die jeweils einen damit korrespondierenden Anschlag 13, 14 freigeben.

Bezogen auf den Einbauzustand gemäß Figur 1 sind die Anschläge 13, 14 somit an axial entgegengesetzten Seiten, nämlich an einer dem Gelenkgehäuse 2 zugewandten Seite und einer dem Lenkgetriebe 7 zugewandten Seite des metallischen Einsatzes 12 ausgebildet. Dabei liegen die axialen Anschläge 13, 14 gegenüber einer axialen Anlagefläche 19 des Dämpfungselements 11 in dessen unverformtem Zustand jeweils axial zurück. Durch diese Anordnung ist gewährleistet, dass ein Kontakt zwischen Gelenkgehäuse 2 und Gehäuse 8 des Lenkgetriebes 7 zunächst über die Anlageflächen 19 des Dämpfungselements 11 zustande kommt und erst bei einer vollständigen Komprimierung des elastischen Dämpfungselements 11 ein Endanschlag über die axialen Anschläge 13, 14 erreicht wird.

Die Aussparungen 16 weisen eine annähernd trichterförmige Aufweitung aus, um zu gewährleisten, dass die axialen Anschläge 13, 14 auch bei einer Materialverschiebung im komprimierten Zustand der Dämpfungseinrichtung 10 in unmittelbaren Kontakt mit Anschlagsflächen an Gelenkgehäuse 2 bzw. Lenkgetriebe 7 gelangen.

Neben den axialseitigen Aussparungen 16 sind im elastischen Dämpfungselement 11 weiterhin drei Aussparungen 17 vorgesehen, welche jeweils eine radial nach innen weisende, am metallischen Einsatz 12 ausgebildete Lasche 15 freigeben. Entsprechend sind am metallischen Einsatz 12 drei radial innen weisende Laschen 15 ausgebildet, die um 120 Grad zueinander versetzt angeordnet und damit gleichmäßig voneinander beabstandet sind.

Die Laschen 15 sind von der Mittelachse 9 des Axialkugelgelenks 1 jeweils weiter beabstandet sind als ein am Gelenkgehäuse 2 ausgebildeter Absatz 18, jedoch weniger weit beabstandet sind als ein Außenumfang der Zahnstange 20. Durch diese Abmessungen, wonach die drei nach innen gestellten Laschen 15 einen größeren Innendurchmesser als der zugehörige Außendurchmesser des Gelenkgehäuses 2 im Bereich des Absatzes 18 aufweisen, ist zunächst gewährleistet, dass zwischen metallischem Einsatz 12 und dem Absatz 18 des Gelenkgehäuses 2 ein Freiraum besteht, welcher ein axiales Spiel zwischen diesen ermöglicht. Weiterhin wird durch die genannten Abmessungen wirksam verhindert, dass die Dämpfungseinrichtung 10 in axialer Richtung über eine am Gelenkgehäuse 2 zu befestigende Zahnstange 20 des Lenkgetriebes 7 rutschen kann. Die Laschen 15 dienen somit als Verliersicherung, welche die Dämpfungseinrichtung 10 axial gegenüber der Zahnstange 20 sichert.

### Bezuaszeichen

- 1: Axialkugelgelenk
- 2: Gelenkgehäuse
- 3: Gehäusezapfen
- 4: Gelenkkugel
- 5: Gelenkzapfen
- 6: Spurstange
- 7: Lenkgetriebe
- 8: Gehäuse des Lenkgetriebes
- 9: Mittelachse
- 10: Dämpfer
- 11: Kunststoffring
- 12: Blechring
- 13: Nocken
- 14: Nocken
- 15: Lasche
- 16: Aussparung
- 17: Aussparung
- 18: Absatz
- 19: Anlagefläche
- 20: Zahnstange

## Patentansprüche

1. Axialkugelgelenk (1), insbesondere zur Verwendung an einem Lenkgetriebe (7), umfassend ein einseitig offenes Gelenkgehäuse (2) zur Aufnahme einer einem Gelenkzapfen (5) zugeordneten Gelenkkugel (4), wobei an dem Gelenkgehäuse (2) ein Gehäusezapfen (3) angeordnet ist und wobei auf der mit dem Gehäusezapfen (3) versehenen Seite des Gelenkgehäuses (2) eine Dämpfungseinrichtung (10) vorgesehen ist, und die Dämpfungseinrichtung (10) ein elastisches Dämpfungselement (11) aus Kunststoff mit einem metallischen Einsatz (12) aufweist, **dadurch gekennzeichnet, dass** der metallische Einsatz (12) vom Material des elastischen Dämpfungselements (11) umspritzt ist und das Dämpfungselement (11) an axial entgegengesetzten Seiten jeweils eine axiale Anlagefläche (19) aufweist, wobei in einem unverformten Zustand bei Erreichen eines Lenkanschlags einerseits das Gelenkgehäuse (2), andererseits ein Gehäuse (8) des Lenkgetriebes (7) mit diesen axialen Anlageflächen (19) des Dämpfungselements (11) zur Anlage kommt.

2. Axialkugelgelenk nach Anspruch 1, **dadurch gekennzeichnet, dass** das Dämpfungselement (11) und der metallische Einsatz (12) ringförmig ausgebildet und koaxial zueinander angeordnet sind.

3. Axialkugelgelenk nach Anspruch 1 oder 2, **dadurch gekennzeichnet, dass** das Dämpfungselement (11) aus thermoplastischem Polyurethan gefertigt ist.

4. Axialkugelgelenk nach einem der Ansprüche 1 bis 3, **dadurch gekennzeichnet, dass** das Dämpfungselement (11) und der metallische Einsatz (12) durch Formschluss miteinander verbunden sind.

5. Axialkugelgelenk nach einem der Ansprüche 1 bis 4, **dadurch gekennzeichnet, dass** die Dämpfungseinrichtung (10) bezogen auf eine Radialebene im Wesentlichen symmetrisch gestaltet ist.

6. Axialkugelgelenk nach einem der Ansprüche 1 bis 5, **dadurch gekennzeichnet, dass** im Dämpfungselement (11) wenigstens eine Aussparung (16, 17) vorgesehen ist, um ein Funktionselement (13, 14, 15) des metallischen Einsatzes (12) freizugeben.

7. Axialkugelgelenk nach Anspruch 6, **dadurch gekennzeichnet, dass** die wenigstens eine Aussparung (16) einen axialen Anschlag (13, 14) des metallischen Einsatzes (12) freigibt, welcher die axiale Verformung der Dämpfungseinrichtung (10) begrenzt.

8. Axialkugelgelenk nach einem der Ansprüche 1 bis 7, **dadurch gekennzeichnet, dass** an dem metallischen Einsatz (12) mehrere, bevorzugt sechs axiale Anschläge (13, 14) ausgebildet sind, die über den Umfang gleich voneinander beabstandet sind.

9. Axialkugelgelenk nach Anspruch 8, **dadurch gekennzeichnet, dass** die axialen Anschläge (13, 14) an axial entgegengesetzten Seiten, insbesondere an einer dem Gelenkgehäuse (2) zugewandten Seite und an einer dem Lenkgetriebe (7) zugewandten Seite des metallischen Einsatzes (12) ausgebildet sind.

10. Axialkugelgelenk nach Anspruch 8 oder 9, **dadurch gekennzeichnet, dass** die axialen Anschläge (13, 14) gegenüber der axialen Anlagefläche (19) des Dämpfungselements (11) in dessen unverformtem Zustand zurückversetzt sind.

11. Axialkugelgelenk nach einem der Ansprüche 6 bis 10, **dadurch gekennzeichnet, dass** die Aussparungen (16) eine Aufweitung aufweisen, um zu gewährleisten, dass die axialen Anschläge (13, 14) auch bei einer Materialverschiebung im komprimierten Zustand der Dämpfungseinrichtung (10) in unmittelbaren Kontakt mit Anschlagsflächen an Gelenkgehäuse (2) bzw. Lenkgetriebe (7) gelangen.

12. Axialkugelgelenk nach einem der Ansprüche 6 bis 11, **dadurch gekennzeichnet, dass** die wenigstens eine Aussparung (17) eine radial nach innen weisende, am metallischen Einsatz (12) ausgebildete Lasche (15) freigibt.

13. Axialkugelgelenk nach einem der Ansprüche 1 bis 12, **dadurch gekennzeichnet, dass** am metallischen Einsatz (12) mehrere, vorzugsweise drei radial nach innen weisende Laschen (15) ausgebildet sind, die von der Mittelachse (9) des Axialkugelgelenks (1) jeweils weiter beabstandet sind als ein am Gelenkgehäuse (2) ausgebildeter Absatz (18), jedoch weniger weit beabstandet sind als ein Außenumfang der Zahnstange (20).

## Claims

1. Axial ball joint (1), in particular for use on a steering gear (7), comprising a joint housing (2) which is open on one side for receiving a joint ball (4) which is assigned to a joint pivot (5), a housing pivot (3) being arranged on the joint housing (2), and a damping device (10) being provided on that side of the joint housing (2) which is provided with the housing pivot (3), and the damping device (10) having an elastic damping element (11) made from plastic with a metallic insert (12), **characterized in that** the metallic insert (12) is overmoulded by the material of the elastic damping element (11), and the damping element (11) has in each case one axial bearing face (19) on axially opposite sides, the joint housing (2) on one side and a housing (8) of the steering gear (7) on the other side coming into contact with the said axial bearing faces (19) of the damping element (11) in a non-deformed state when a steering stop is reached.

2. Axial ball joint according to Claim 1, **characterized in that** the damping element (11) and the metallic insert (12) are of annular configuration and are arranged coaxially with respect to one another.

3. Axial ball joint according to Claim 1 or 2, **characterized in that** the damping element (11) is manufactured from thermoplastic polyurethane.

4. Axial ball joint according to one of Claims 1 to 3, **characterized in that** the damping element (11) and the metallic insert (12) are connected to one another by way of a positively locking connection.

5. Axial ball joint according to one of Claims 1 to 4, **characterized in that** the damping device (10) is of substantially symmetrical design in relation to a radial plane.

6. Axial ball joint according to one of Claims 1 to 5, **characterized in that** at least one cut-out (16, 17) is provided in the damping element (11), in order to expose a functional element (13, 14, 15) of the metallic insert (12) .

7. Axial ball joint according to Claim 6, **characterized in that** the at least one cut-out (16) exposes an axial stop (13, 14) of the metallic insert (12), which axial stop (13, 14) limits the axial deformation of the damping device (10).

8. Axial ball joint according to one of Claims 1 to 7, **characterized in that** a plurality of, preferably six, axial stops (13, 14) are configured on the metallic insert (12), which axial stops (13, 14) are spaced apart uniformly from one another over the circumference.

9. Axial ball joint according to Claim 8, **characterized in that** the axial stops (13, 14) are configured on axially opposite sides, in particular on a side which faces the joint housing (2) and on a side of the metallic insert (12) which faces the steering gear (7).

10. Axial ball joint according to Claim 8 or 9, **characterized in that** the axial stops (13, 14) are set back with respect to the axial bearing face (19) of the damping element (11) in its non-deformed state.

11. Axial ball joint according to one of Claims 6 to 10, **characterized in that** the cut-outs (16) have a widened portion, in order to ensure that the axial stops (13, 14) pass into direct contact with stop faces on the joint housing (2) and the steering gear (7) even in the case of a material displacement in the compressed state of the damping device (10).

12. Axial ball joint according to one of Claims 6 to 11, **characterized in that** the at least one cut-out (17) exposes a bracket (15) which points radially towards the inside and is configured on the metallic insert (12).

13. Axial ball joint according to one of Claims 1 to 12, **characterized in that** a plurality of, preferably three, radially inwardly pointing brackets (15) are configured on the metallic insert (12), which brackets (15) are spaced apart further in each case from the centre axis (9) of the axial ball joint (1) than a shoulder (18) which is configured on the joint housing (2), but are spaced apart to a lesser extent than an outer circumference of the rack (20).

## Revendications

1. Articulation sphérique axiale (1), notamment destinée à être utilisée dans un mécanisme de direction (7), comprenant un boîtier d'articulation (2) ouvert d'un côté destiné à accueillir une rotule d'articulation (4) associée à un tourillon d'articulation (5), un tenon de boîtier (3) étant disposé au niveau du boîtier d'articulation (2) et un dispositif d'amortissement (10) se trouvant sur le côté du boîtier d'articulation (2) qui est pourvu du tenon de boîtier (3) et le dispositif d'amortissement (10) possédant un élément d'amortissement élastique (11) en matière plastique doté d'un insert métallique (12), **caractérisée en ce que** l'insert métallique (12) est enrobé de la matière de l'élément d'amortissement élastique (11) et l'élément d'amortissement (11) possède respectivement une surface d'appui (19) sur les côtés opposés dans le sens axial, dans un état non déformé, le boîtier d'articulation (2) d'un côté et, de l'autre côté, un boîtier (8) du mécanisme de direction (7) venant reposer contre ces surfaces d'appui (19) axiales de l'élément d'amortissement (11) lorsqu'une butée de braquage est atteinte.

2. Articulation sphérique axiale selon la revendication 1, **caractérisée en ce que** l'élément d'amortissement (11) et l'insert métallique (12) sont de configuration annulaire et sont disposés de manière coaxiale l'un par rapport à l'autre.

3. Articulation sphérique axiale selon la revendication 1 ou 2, **caractérisée en ce que** l'élément d'amortissement (11) est fabriqué en polyuréthane thermoplastique.

4. Articulation sphérique axiale selon l'une des revendications 1 à 3, **caractérisée en ce que** l'élément d'amortissement (11) et l'insert métallique (12) sont reliés l'un à l'autre par complémentarité de formes.

5. Articulation sphérique axiale selon l'une des revendications 1 à 4, **caractérisée en ce que** le dispositif d'amortissement (10) est de configuration sensiblement symétrique en référence à un plan radial.

6. Articulation sphérique axiale selon l'une des revendications 1 à 5, **caractérisée en ce qu'**au moins un évidement (16, 17) se trouve dans l'élément d'amortissement (11), pour exposer un élément fonctionnel (13, 14, 15) de l'insert métallique (12).

7. Articulation sphérique axiale selon la revendication 6, **caractérisée en ce que** l'au moins un évidement (16) expose une butée axiale (13, 14) de l'insert métallique (12), laquelle limite la déformation axiale du dispositif d'amortissement (10).

8. Articulation sphérique axiale selon l'une des revendications 1 à 7, **caractérisée en ce que** plusieurs, de préférence six butées axiales (13, 14) sont formées sur l'insert métallique (12), lesquelles sont espacées uniformément les unes des autres sur le pourtour.

9. Articulation sphérique axiale selon la revendication 8, **caractérisée en ce que** les butées axiales (13, 14) sont formées sur des côtés opposés dans le sens axial, notamment sur un côté de l'insert métallique (12) qui fait face au boîtier d'articulation (2) et sur un côté qui fait face au mécanisme de direction (7) .

10. Articulation sphérique axiale selon la revendication 8 ou 9, **caractérisée en ce que** les butées axiales (13, 14) sont en retrait par rapport à la surface d'appui axiale (19) de l'élément d'amortissement (11) dans son état non déformé.

11. Articulation sphérique axiale selon l'une des revendications 6 à 10, **caractérisée en ce que** les évidements (16) présentent un élargissement destiné à garantir que les butées axiales (13, 14) entrent en contact direct avec les surfaces de butée au niveau du boîtier d'articulation (2) ou du mécanisme de direction (7), même en cas de déplacement de matériau à l'état comprimé du dispositif d'amortissement (10).

12. Articulation sphérique axiale selon l'une des revendications 6 à 11, **caractérisée en ce que** l'au moins un évidement (17) dégage une languette (15) formée sur l'insert métallique (12) et dirigée dans le sens radial vers l'intérieur.

13. Articulation sphérique axiale selon l'une des revendications 1 à 12, **caractérisée en ce que** plusieurs, de préférence trois languettes (15) dirigées dans le sens radial vers l'intérieur sont formées sur l'insert métallique (12), lesquelles sont respectivement plus éloignées de l'axe central (9) de l'articulation sphérique axiale (1) qu'un talon (18) formé sur le boîtier d'articulation (2), mais moins éloignées qu'un pourtour extérieur de la crémaillère de direction (20).
